# FASCICULE DE BREVET EUROPEEN

(11) **EP 1 620 910 B1**
(45) Date de publication et mention de la délivrance du brevet: **25.07.2018**
(21) Numéro de dépôt: 04742398.3
(22) Date de dépôt: 30.03.2004
(51) Int. Cl.: C08K 3/38, H01M 8/1027, H01M 8/103, H01M 8/1032, H01M 8/1048, H01M 8/1081, H01M 8/1072, H01M 8/1086

(54) **MATERIAU COMPOSITE A BASE DE BOROPHOSPHOSILICATE POUVANT NOTAMMENT CONSTITUER UNE MEMBRANE ELECTROLYTIQUE ET PROCEDE DE FABRICATION**
KOMPOSITMATERIAL AUF BASIS VON BOROFOSFOSILIKAT FÜR ELEKTROLYTISCHE MEMBRAN UND HERSTELLUNGSVERFAHREN
BOROPHOSPHOSILICATE-BASED COMPOSITE MATERIAL WHICH CAN BE USED TO CREATE AN ELECTROLYTE MEMBRANE AND METHOD FOR THE PRODUCTION THEREOF

(30) Priorité: 02.04.2003 FR 0304078
(43) Date de publication de la demande: 01.02.2006
(73) Titulaire: Université de Montpellier II, 34095 Montpellier Cedex 5 (FR); Centre National de la Recherche Scientifique, 75794 Paris Cedex 16 (FR); Electricité de France, 75008 Paris (FR)
(72) Inventeur: MORIN, Arnaud, 38100 Grenoble (FR); GAUTIER, Ludmila, 76437 Rastatt (DE); DEABATE, Stephano, 34250 Palavas Les Flots (FR); JONES, Deborah, 34380 Saint Martin de Londres (FR); ROZIERE, Jacques, 34380 Saint Martin de Londres (FR); MOSDALE, Renaut, 38640 Claix (FR)
(74) Mandataire: Talbot, Alexandre
(86) Numéro de dépôt international: PCT/FR2004/000797
(87) Numéro de publication internationale: WO 2004/091032

(56) Documents cités:
- EP-A- 1 095 964
- US-A- 5 523 181
- US-A1- 2002 094 466

## Description

### Domaine technique de l'invention

L'invention concerne un matériau composite, un dispositif électrochimique à conduction protonique comportant une membrane électrolytique solide et un procédé de fabrication d'une membrane électrolytique constituée par ledit matériau composite.

### État de la technique

Les dispositifs électrochimiques tels que les piles à combustible connaissent un intérêt grandissant quelque soit le domaine d'application. Pour des applications stationnaires, il est connu d'utiliser des générateurs électrochimiques d'énergie ayant une température de fonctionnement supérieure à 650°C, tels que les piles à combustible de type SOFC (« Solid Oxide Fuel Cell ») ou MCFC (« Molten Carbonate Fuel Cell »). Le mécanisme de conduction dans les piles à combustible à oxyde solide de type SOFC se fait par sauts d'ions O²⁻ d'un site lacunaire à un autre, dans des céramiques. Ce mécanisme a une énergie d'activation élevée qui nécessite une température de fonctionnement pouvant atteindre 1000°C. En raison de ces températures élevées, ce type de pile nécessite des dispositifs de gestion thermique périphériques rendant la pile encombrante.

Pour des applications portables, il est connu d'utiliser des piles à combustibles ayant une température de fonctionnement inférieure à 100°C, tels que les piles à combustibles de type PEMFC (Proton Exchange Membrane Fuel Cell ») ou DMFC (« Direct Methanol Fuel Cell »). A titre d'exemple, les piles de type PEMFC comportent un électrolyte en polymère sulfoné qui a une température de fonctionnement maximale située entre 80°C et 90°C et dont le mode de conduction nécessite un taux d'humidité relative de 100%. Il en résulte des contraintes de fonctionnement qui augmentent les coûts et diminue le rendement du système associé à la pile. Ainsi, des dispositifs d'humidification, un compresseur pour humidifier les gaz dans le cas d'une température de fonctionnement de la pile supérieure à 100°C et un système de gestion thermique pour refroidir la pile sont ajoutés à la pile à combustible. De plus, le rendement de la pile est limité par la cinétique de réduction de l'oxygène et la pile est sensible à l'empoisonnement au monoxyde de carbone.

Il existe également des piles à combustible fonctionnant entre 100°C et 250°C telles que les piles de type AFC (Alkaline Fuel Cell) ou PAFC (Phosphoric Acide Fuel Cell). Cependant, elles comportent un électrolyte liquide les rendant moins stables que les piles à combustible comportant un électrolyte solide. Ainsi, dans les piles de type AFC, l'utilisation d'un électrolyte basique liquide peut provoquer la précipitation de carbonates en présence de CO₂. Ce phénomène peut être limité par un traitement des réactifs ou par une circulation régénératrice de l'électrolyte. Cette solution rend, cependant, la structure de la pile plus complexe et diminue le rendement. L'électrolyte des piles de type PAFC comporte de l'acide phosphorique liquide et n'a pas besoin d'être régénéré. Il est, cependant, difficilement applicable pour des applications portables. En effet, lorsque des phases d'arrêt et de démarrage se succèdent, dans des voitures par exemple, de l'eau se condense, durant la phase d'arrêt, au niveau de la cathode, avant d'être évacuée lors du démarrage. Ce phénomène peut provoquer une élution progressive de l'électrolyte, ce qui induit une réduction des performances au cours du temps.
Actuellement, il n'existe pas de dispositif électrochimique à conduction protonique ayant une température de fonctionnement comprise entre 150°C et 400°C et comportant un électrolyte solide. Il existe, cependant, des matériaux stables thermiquement entre 150°C et 400°C et possédant de bonnes propriétés de conduction dans ce domaine de température. Ainsi, dans l'article « Proton conducting membranes for fuel cell applications in the temperature range above 150°C » présenté à la conférence « France-Deutschland Fuel Cell Conference 2002 » du 7 au 10 Octobre 2002 à Forbach, Arnaud Morin et al. ont étudié la synthèse sol-gel d'un verre de borophosphosilicate (SiO₂-B₂O₃-P₂O₅), dérivé du phosphate de bore (BPO₄), ainsi que ses propriétés de conduction protonique et sa stabilité en présence d'eau. L'article décrit que la composition du borophosphosilicate fabriqué par une réaction sol-gel peut être ajustée pour obtenir un composé solide, stable en présence d'eau et ayant des propriétés protoniques satisfaisantes à haute température. Le composé reste, cependant, difficile à mettre en forme. Ainsi, sous forme de membrane mince, il est trop fragile pour être utilisé dans une pile à combustible. US20020094466 décrit un matériau composite et une membrane composite comprenant un ionomère et un phyllosilicate inorganique.

### Objet de l'invention

L'invention a pour but un matériau composite présentant une bonne conductivité protonique, stable chimiquement pour des températures allant jusqu'à 400°C et facile à mettre en forme.

Selon l'invention, ce but est atteint par le fait que le matériau composite est composé de borophosphosilicate et d'une matrice organique constituée par un polymère stable.

Selon un développement de l'invention, le polymère est choisi parmi un polyimide, un polysulfone, un polyétherimide, un polybenzimidazole et un polybenzoxazole.

Selon un mode de réalisation préférentiel, le borophosphosilicate a la formule suivante : SiO₂-xB₂O₃-yP₂O₅, x et y étant positifs.

Selon un autre mode de réalisation préférentiel, le matériau composite comporte un agent de couplage destiné à favoriser l'interaction chimique entre le borophosphosilicate et la matrice organique.

L'invention a également pour but un dispositif électrochimique à conduction protonique, peu encombrant, ayant un rendement élevé et capable de fonctionner jusqu'à une température de 400°C et à un taux d'humidité relative quelconque.

Selon l'invention, ce but est atteint par le fait que la membrane électrolytique est constituée par ledit matériau composite.

Selon un développement de l'invention, la membrane électrolytique a une épaisseur comprise entre 10 micromètres et 100 micromètres.

L'invention a également pour but un procédé de fabrication d'un matériau composite facile à mettre en oeuvre.

Selon l'invention, ce but est atteint par le fait que le procédé comporte au moins les étapes suivantes :
- préparation d'une première solution comportant un premier solvant et un précurseur du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate, évaporer les solvants et former le polymère.

Selon l'invention, ce but peut également être atteint par le fait que le procédé comporte au moins les étapes suivantes :
- préparation d'une première solution comportant un premier solvant et le polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate et à évaporer les solvants.

L'invention a également pour but un procédé de fabrication d'une membrane électrolytique solide, facile à mettre en oeuvre et capable de s'adapter facilement aux propriétés chimiques, physiques et structurales souhaitées pour ladite membrane.

Selon l'invention, ce but est atteint par le fait que le procédé de fabrication comporte au moins les étapes suivantes :
- préparation d'une première solution comportant un premier solvant et un précurseur du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution de manière à former le borophosphosilicate, évaporer les solvants et former le polymère.

Selon l'invention, ce but peut également être atteint par le fait que le procédé de fabrication comporte au moins les étapes suivantes :
- préparation d'une première solution comportant un premier solvant et du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate et à évaporer les solvants.

Selon l'invention, ce but peut également être atteint par le fait que le procédé de fabrication comporte au moins les étapes suivantes :
- préparation, par réaction sol-gel, d'une solution inorganique comportant un précurseur du borophosphosilicate,
- fabrication d'une membrane comportant soit un précurseur du polymère de la matrice organique, soit le polymère de la matrice organique,
- imprégnation de la membrane par la solution inorganique,
- traitement thermique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique d'une synthèse sol-gel d'un borophophosilicate, selon l'art antérieur.
Les figures 2 et 3 représentent des premier et second modes de réalisation d'un procédé de fabrication d'une membrane électrolytique selon l'invention.

### Description de modes particuliers de réalisation.

Un dispositif électrochimique à conduction protonique, selon l'invention, comporte une membrane électrolytique constituée par un matériau composite composé de borophosphosilicate et d'une matrice organique. La matrice organique est constituée par un polymère stable thermiquement jusqu'à 400°C. Le polymère peut, par exemple, être choisi parmi un polyimide, un polysulfone, un polyétherimide, un polybenzimidazole et un polybenzoxazole et le borophosphosilicate a, de préférence, la formule suivante SiO₂-xB₂O₃-yP₂O₅, x et y étant positifs. Le pourcentage massique de borophosphosilicate, dans le matériau composite, est, de préférence, inférieur ou égal à 50%. A titre d'exemple, un matériau composite peut comporter 30% en poids de borophosphosilicate.

Le polymère stable thermiquement ou le précurseur du polymère destiné à former le polymère lors de l'élaboration du matériau composite peut présenter une interaction chimique avec le borophosphosilicate ou bien l'interaction chimique entre la matrice organique et le borophosphosilicate peut être favorisée grâce à un agent de couplage. L'agent de couplage peut être de tout type et il peut former ou faciliter des liaisons chimiques entre le polymère ou le précurseur du polymère et le borophosphosilicate. A titre d'exemple, le glycidoxypropyl triméthoxysilane ou l'aminophényl triméthoxysilane peut être utilisé comme agent de couplage entre le borophosphosilicate et la matrice organique à base de polymide formé à partir de son précurseur, l'acide polyamique.

La membrane électrolytique solide présente, grâce au borophosphosilicate, de bonnes propriétés de conduction protonique entre 150°C et 650°C. En effet, dans un tel oxyde ternaire, deux mécanismes de conduction peuvent être envisagés : un premier mécanisme par solvatation de protons dans l'eau, à des taux d'humidité relative élevés, et un second mécanisme par saut de protons entre des sites actifs, le second mécanisme étant réalisé à haute température, à des taux d'humidité relative plutôt faibles. L'utilisation d'une matrice organique en polymère stable thermiquement permet de mettre facilement en forme la membrane et assure sa tenue. La matrice organique confère, ainsi, au borophosphosilicate la souplesse et la résistance, nécessaires à la formation d'une membrane auto-supportée de faible épaisseur et ayant de bonnes propriétés mécaniques. Ainsi, il est possible de réaliser une membrane ayant une épaisseur comprise entre 10 micromètres et 100 micromètres.

Une telle membrane peut donc être utilisée dans des dispositifs électrochimiques à conduction protonique ayant une température de fonctionnement allant jusqu'à 400°C, et de préférence, entre 150°C et 400°C. Le dispositif électrochimique peut être, par exemple, un capteur d'hydrogène. Pour une température de fonctionnement comprise entre 150°C et 400°C, le dispositif électrochimique est, de préférence, une pile à combustible pouvant être utilisée pour des applications stationnaires ou mobiles. La pile à combustible remplace, avantageusement les piles à combustible de type AFC ou PAFC car elle est plus simple, moins encombrante, tout en évitant les inconvénients propres aux électrolytes liquides, tels que les fuites, la corrosion, l'empoisonnement ou l'élution de l'électrolyte...

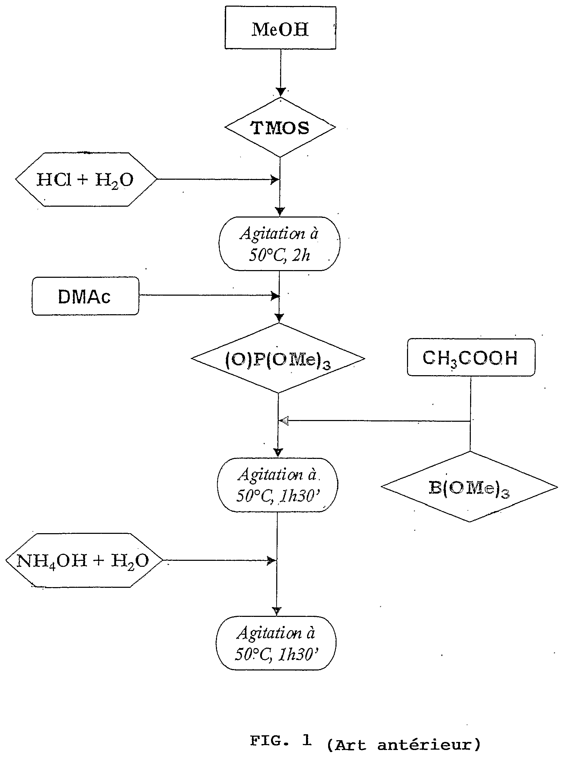

Le procédé de fabrication de la membrane électrolytique se fait en plusieurs étapes successives. Dans un premier mode particulier de réalisation, une des principales étapes consiste à former un précurseur du borophosphosilicate, également appelé « sol » de borophosphosilicate. La préparation de la solution de borophosphosilicate est, de préférence, réalisée selon une réaction sol-gel telle que celle représentée, à titre d'exemple, à la figure 1. Ainsi, sur la figure 1, du tétraméthyl orthosilicate, utilisé comme précurseur de la silice et également connu sous le nom de TMOS (Si-(OCH₃)₄), est dilué dans du méthanol (CH₃OH). La solution est ensuite hydrolysée avec une solution d'acide chlorhydrique, puis elle est agitée à 50°C pendant 2 heures.

Du diméthyl acétamide (DMAc) utilisé comme cosolvant, un mélange d'acide acétique (CH₃COOH) et de triméthylphosphate (O=P-(O-CH₃)₃) utilisé comme précurseur de phosphate, et du triméthylborate (B-(O-CH₃)₃) utilisé comme précurseur de bore, sont ajoutés à la solution de TMOS et de méthanol. L'ensemble est agité à 50°C pendant une heure et demi puis il est mélangé à une solution d'ammoniaque destinée à favoriser la condensation. La solution est, ensuite, agitée à 50°C pendant une heure et demi, de manière à obtenir une solution de borophosphosilicate.

Les propriétés chimiques, physiques et structurales du borophosphosilicate peuvent être facilement ajustées, en faisant varier un ou plusieurs paramètres de la réaction (pH, nature et concentration des solvants, température, temps, nature des précurseurs...). Il est, ainsi, possible d'obtenir des borophosphosilicates de formule générale SiO₂-xB₂O₃-yP₂O₅. (x et y positifs) et capables de former, avec une matrice organique en polymère stable thermiquement jusqu'à 400°C, un matériau composite destiné à constituer une membrane électrolytique pour un dispositif électrochimique à conduction protonique. A titre d'exemple, le composé inorganique obtenu selon la synthèse sol-gel représentée à la figure 1 peut avoir la formule suivante : SiO₂-0,25B₂O₃-0,25P₂O₅.

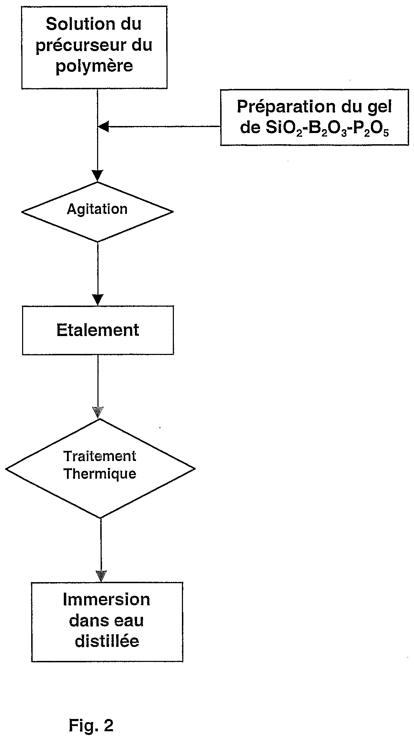

De plus, le fait de réaliser le borophosphosilicate par une réaction sol-gel permet de fabriquer la membrane électrolytique de manière « in-situ ». Ainsi, dans un premier mode de réalisation d'une membrane électrolytique (figure 2), le matériau composite est obtenu par formation « in-situ », c'est-à-dire que le borophosphosilicate est formé dans la matrice organique. En effet, une première solution est préparée en mélangeant un premier solvant et un précurseur d'un polymère stable thermiquement, par exemple jusqu'à 400°C.

Pour une matrice organique en polyimide, le précurseur du polymère est un acide polyamique qui, par imidation, forme un polyimide. L'acide polyamique peut être, par exemple, un acide polyamique commercialisé par la société Sigma-Aldrich, sous le nom de « Poly(3,3',4,4'-biphenyltetracarboxylic dianhydride-co-1,4phenylenediamine), amic acid » en solution dans du 1-méthyl-2-pyrrolidinone. Il est également possible d'utiliser un autre acide polyamique commercialisé par la société Sigma-Aldrich, sous le nom de « Poly(pyromellitic dianhydride-co-4,4'-oxydianiline), amic acid » en solution. L'utilisation d'un acide polyamique comme précurseur du polymère du matériau composite permet d'obtenir un polyimide ayant une bonne affinité avec le borophosphosilicate et qui assure une bonne homogénéité du matériau. Les polyimides sont des polymères thermostables, isolants et présentant une bonne imperméabilité aux gaz.

Une seconde solution comportant le borophosphosilicate est réalisée, par exemple, selon la réaction sol-gel représentée à la figure 1. Les première et seconde solutions sont ensuite mélangées sous agitation mécanique de manière à former une troisième solution qui est, alors, homogénéisée, par exemple, par traitement aux ultrasons. La solution homogène ainsi obtenue est, alors, mise en forme. Elle peut être, ainsi, coulée sur un support, qui peut être, par exemple, en verre ou en aluminium, puis elle est étalée à l'aide d'un couteau ayant une épaisseur calibrée, de manière à déterminer l'épaisseur de la membrane électrolytique. Elle peut, également, être déposée par trempage sur un support. Elle subit ensuite un traitement thermique destiné à former le borophosphosilicate, évaporer les solvants et provoquer l'imidation de l'acide polyamique pour former la matrice organique en polyimide. Le traitement thermique est, de préférence, réalisé par une augmentation suffisamment lente de la température, afin de ne pas dégrader les solvants (par exemple, de l'ordre de 30 heures pour passer d'une température ambiante à 300°C). La membrane ainsi obtenue est ensuite retirée du support par immersion dans une solution dans laquelle la membrane ne risque pas de se dissoudre, par exemple de l'eau distillée, de manière à libérer la membrane lorsqu'on désire obtenir une membrane auto-portée, c'est-à-dire ayant une épaisseur supérieure à 10 micromètres. Dans d'autres cas, la membrane peut rester sur le support.

Un tel procédé de fabrication permet d'ajuster, à convenance, les trois principaux paramètres du matériau composite : la composition du borophosphosilicate déterminée par les paramètres de la réaction sol-gel, le pourcentage massique de borophosphosilicate dans le matériau composite et la nature du polymère constituant la matrice. De plus il est facile et rapide à mettre en oeuvre.

Selon une variante de réalisation, le polymère préalablement formé peut remplacer le précurseur du polymère dans la première solution de sorte que le traitement thermique de la troisième solution est uniquement destiné à former le borophosphosilicate et à évaporer les solvants.

Par ailleurs, lorsque le matériau composite comporte un agent de couplage, celui-ci peut être ajouté soit dans la première solution contenant le précurseur du polymère ou le polymère, soit dans la seconde solution comportant le précurseur du borophosphosilicate. Une telle variante de réalisation est, par exemple, adaptée à la fabrication d'une membrane électrolytique comportant un matériau composite dont la matrice organique est constituée par du polybenzimidazole.

Dans un second mode particulier de réalisation, les précurseurs de la silice, de phosphate et de bore destinés à former le précurseur du borophosphosilicate peuvent être ajoutés à un moment quelconque du procédé de fabrication de la membrane, avec éventuellement un solvant adapté et dans un ordre quelconque dès lors qu'après l'ajout des trois précurseurs, un traitement thermique est réalisé de manière à former le borophosphosilicate. Ainsi, les précurseurs de la silice, du phosphate et du bore peuvent, par exemple, être ajoutés directement et dans un ordre quelconque dans la première solution contenant un solvant et un précurseur du polymère ou le polymère préalablement formé, de manière à former une seconde solution. La seconde solution est alors déposée sur un support et subit un traitement thermique destiné à former le borophosphosilicate et à évaporer le solvant.

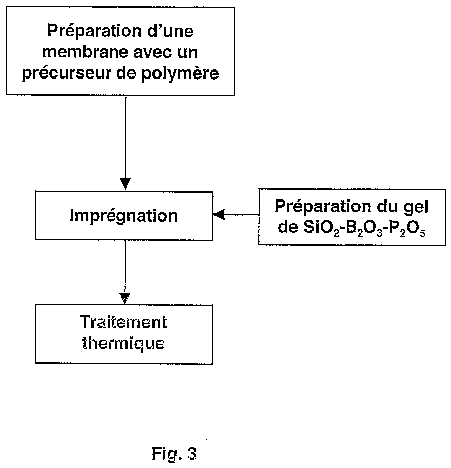

Selon un troisième mode particulier de réalisation représenté à la figure 3, il est possible de former, en premier lieu, une membrane comportant soit un précurseur du polymère soit le polymère de la matrice organique, puis d'incorporer la solution de borophosphosilicate dans la membrane ainsi formée, avant de réaliser un traitement thermique. Ainsi, une membrane en acide polyamique ou en polyimide peut être formée, à partir d'une première solution d'acide polyamique et de solvant, par coulée sur un support et par évaporation partielle ou totale du solvant. Puis, la solution de borophosphosilicate réalisée par une synthèse sol-gel imprègne la membrane formée avant qu'elle ne subisse un traitement thermique destiné à former le borophosphosilicate, évaporer les solvants restants et former le polyimide de la matrice organique, par imidation de l'acide polyamique, dans le cas où celui-ci n'a pas été formé au préalable.

Dans une variante de réalisation, la membrane est formée à partir d'une première solution comportant un solvant, un précurseur du polymère ou le polymère et dans laquelle sont ajoutés les précurseurs de silice et de bore et éventuellement un solvant. La solution est ainsi déposée sur un support puis elle peut subir un premier traitement thermique destiné à évaporer au moins partiellement le ou les solvants. Elle est ensuite imprégnée par trempage dans une seconde solution contenant la source de phosphore avant de subir un second traitement thermique destiné à former le borophosphosilicate, à éventuellement évaporer le ou les solvants restants et à former le polymère si nécessaire. Les précurseurs de silice et de bore peuvent également être contenus dans la seconde solution, avec le précurseur de bore et éventuellement un solvant adapté. La première solution est alors imprégnée par enduction de la seconde solution, une fois la membrane comprenant la matrice organique formée, c'est-à-dire une fois la première solution déposée sur le support et après un éventuel premier traitement thermique destiné à évaporer au moins partiellement le solvant.

L'invention concerne également un matériau composite composé de borophosphosilicate et d'une matrice organique constituée par un polymère stable thermiquement, et un procédé de fabrication d'un tel matériau composite. Le procédé comporte au moins la préparation d'une première solution comportant un premier solvant et un précurseur du polymère de la matrice organique et la préparation, par réaction sol-gel, d'une seconde solution comportant un précurseur du borophosphosilicate et au moins un second solvant. Les première et seconde solutions sont ensuite mélangées, de manière à obtenir une troisième solution, qui est ensuite déposée sur un support. La troisième solution subit ensuite un traitement thermique pour former le borophosphosilicate, évaporer les solvants et former le polymère. Dans une variante de réalisation, le polymère préalablement formé remplace le précurseur du polymère dans la première solution de sorte que le traitement thermique de la troisième solution est uniquement destiné à former le borophosphosilicate et à évaporer les solvants. Par ailleurs, lorsque le matériau composite comporte un agent de couplage, celui-ci peut être ajouté soit dans la première solution contenant le précurseur du polymère ou le polymère, soit dans la seconde solution comportant le précurseur du borophosphosilicate.

L'invention n'est pas limitée aux modes particuliers de réalisation décrits ci-dessus. Ainsi, l'imidation de l'acide polyamique peut être réalisée chimiquement au lieu d'être réalisée par traitement thermique.

## Revendications

1. Matériau composite **caractérisé en ce qu'**il est composé de borophosphosilicate et d'une matrice organique constituée par un polymère stable thermiquement.

2. Matériau composite selon la revendication 1, **caractérisé en ce que** le polymère est choisi parmi un polyimide, un polysulfone, un polyétherimide, un polybenzimidazole et un polybenzoxazole.

3. Matériau composite selon l'une des revendications 1 et 2, **caractérisé en ce que** le borophosphosilicate a la formule suivante : SiO₂-xB₂O₃-yP₂O₅, x et y étant positifs.

4. Matériau composite selon l'une quelconque des revendications 1 à 3, **caractérisé en ce qu'**il comporte un agent de couplage destiné à favoriser l'interaction chimique entre le borophosphosillcate et la matrice organique.

5. Matériau composite selon l'une quelconque des revendications 1 à 4, **caractérisé en ce que** le pourcentage massique du borophosphosilicate, dans le matériau composite, est inférieur ou égal à 50%.

6. Dispositif électrochimique à conduction protonique comportant une membrane électrolytique solide **caractérisé en ce que** la membrane électrolytique est constituée par un matériau composite selon l'une quelconque des revendications 1 à 5.

7. Dispositif électrochimique selon la revendication 6, **caractérisé en ce que** la membrane électrolytique a une épaisseur comprise entre 10 micromètres et 100 micromètres.

8. Dispositif électrochimique selon l'une des revendications 6 et 7, **caractérisé en ce que** le dispositif électrochimique est un capteur d'hydrogène.

9. Dispositif électrochimique selon l'une des revendications 6 et 7, **caractérisé en ce que** le dispositif électrochimique est une pile à combustible.

10. Procédé de fabrication d'un matériau composite selon l'une quelconque des revendications 1 à 5, ledit matériau composite étant composé de borophosphosilicate et d'une matrice organique constituée par un polymère stable thermiquement, procédé caractérisé en qu'il comporte au moins les étapes suivantes :
- préparation d'une première solution comportant un premier solvant et un précurseur du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate, évaporer les solvants et former le polymère.

11. Procédé de fabrication d'un matériau composite selon l'une quelconque des revendications 1 à 5, ledit matériau composite étant composé de borophosphosilicate et d'une matrice organique constituée par un polymère stable thermiquement, procédé caractérisé en qu'il comporte au moins les étapes suivantes :
- préparation d'une première solution comportant un premier solvant et le polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate et à évaporer les solvants.

12. Procédé de fabrication d'une membrane électrolytique constituée par un matériau composite selon l'une quelconque des revendications 1 à 5, composé de borophosphosilicate et d'une matrice organique constituée par un polymère stable thermiquement, procédé caractérisé en qu'il comporte au moins les étapes suivantes :
- préparation d'une première solution comportant un premier solvant et un précurseur du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate, évaporer les solvants et former le polymère.

13. Procédé de fabrication d'une membrane électrolytique constituée par un matériau composite selon l'une quelconque des revendications 1 à 5, composé de borophosphosilicate et d'une matrice organique constituée par un polymère stable thermiquement, procédé caractérisé en qu'il comporte au moins les étapes suivantes :
- préparation d'une première solution comportant un premier solvant et du polymère de la matrice,
- préparation, par réaction sol-gel, d'une seconde solution comportant un précurseur du borophosphosilicate et au moins un second solvant,
- mélange des première et seconde solutions de manière à obtenir une troisième solution,
- dépôt de la troisième solution sur un support,
- traitement thermique de la troisième solution, de manière à former le borophosphosilicate et à évaporer les solvants.

14. Procédé de fabrication d'une membrane électrolytique constituée par un matériau composite selon l'une quelconque des revendications 1 à 5, composé de borophosphosilicate et d'une matrice organique constituée par un polymère stable thermiquement, procédé caractérisé en qu'il comporte au moins les étapes suivantes :
- Préparation, par réaction sol-gel, d'une solution inorganique comportant un précurseur du borophosphosilicate,
- fabrication d'une membrane comportant soit un précurseur du polymère de la matrice organique, soit le polymère de la matrice organique,
- imprégnation de la solution inorganique comportant le précurseur du borophosphosilicate dans la membrane,
- traitement thermique.

## Patentansprüche

1. Verbundmaterial, **dadurch gekennzeichnet, dass** es aus Borphosphosilikat und einer organischen Matrix aus einem thermisch stabilen Polymer besteht.

2. Verbundwerkstoff nach Anspruch 1, **dadurch gekennzeichnet, dass** das Polymer aus der von Polyimiden, Polysulfonen, Polyetherimiden und Polybenzoxazolen gebildeten Gruppe ausgewählt ist.

3. Verbundwerkstoff nach einem der Ansprüche 1 und 2, **dadurch gekennzeichnet, dass** das Borphosphosilikat folgende Formel aufweist: SiO₂-xB₂O₃-yP₂O₅, wobei x und y positiv sind.

4. Verbundmaterial nach einem der Ansprüche 1 bis 3, das **dadurch gekennzeichnet ist, dass** es ein Kupplungsmittel enthält, das dazu vorgesehen ist, die chemische Wechselwirkung zwischen dem Borphosphosilikat und der organischen Matrix zu begünstigen.

5. Verbundmaterial nach einem der Ansprüche 1 bis 4, **dadurch gekennzeichnet, dass** der Masseprozentanteil des Borphosphosilikats im Verbundmaterial niedriger als oder gleich 50% ist.

6. Elektrochemische, protonenleitende Vorrichtung, die eine feste Elektrolytmembran umfasst, **dadurch gekennzeichnet, dass** die Elektrolytmembran aus einem Verbundmaterial nach einem der Ansprüche 1-5 besteht.

7. Elektrochemische Vorrichtung nach Anspruch 6, **dadurch gekennzeichnet, dass** die Elektrolytmembran eine Dicke von 10 bis 100 Mikrometer hat.

8. Elektrochemische Vorrichtung nach einem der Ansprüche 6 und 7, **dadurch gekennzeichnet, dass** die elektrochemische Vorrichtung ein Wasserstoffsensor ist.

9. Elektrochemische Vorrichtung nach einem der Ansprüche 6 und 7, **dadurch gekennzeichnet, dass** die elektrochemische Vorrichtung eine Brennstoffzelle ist.

10. Verfahren zur Herstellung eines Verbundmaterials nach einem der Ansprüche 1 bis 5, welches Verbundmaterial von Borphosphosilikat und einer organischen Matrix gebildet wird, die aus einem thermisch stabilen Polymer besteht, Verfahren, das **dadurch gekennzeichnet ist, dass** es folgende Schritte umfasst:
- Herstellung einer ersten Lösung, die ein erstes Lösungsmittel und eine Vorstufe des Polymers der Matrix umfasst,
- Herstellung einer zweiten Lösung durch Sol-Gel-Reaktion, die eine Vorstufe des Borphosphosilikats und mindestens ein zweites Lösungsmittel enthält,
- Vermengung der ersten und zweiten Lösung zum Erhalt einer dritten Lösung,
- Aufbringen der dritten Lösung auf einen Träger,
- Wärmebehandlung der dritten Lösung zum Bilden des Borphosphosilikats, zur Verdampfung der Lösungsmittel und Bildung des Polymers.

11. Verfahren zur Herstellung eines Verbundmaterials nach einem der Ansprüche 1 bis 5, welches Verbundmaterial von Borphosphosilikat und einer organischen Matrix gebildet wird, die aus einem thermisch stabilen Polymer besteht, Verfahren, das **dadurch gekennzeichnet ist, dass** es folgende Schritte umfasst:
- Herstellung einer ersten Lösung, die das erste Lösungsmittel und das Polymer der Matrix umfasst,
- Herstellung einer zweiten Lösung durch Sol-Gel-Reaktion, die eine Vorstufe des Borphosphosilikats und mindestens ein zweites Lösungsmittel enthält,
- Vermengung der ersten und zweiten Lösung zum Erhalt einer dritten Lösung,
- Aufbringen der dritten Lösung auf einen Träger,
- Wärmebehandlung der dritten Lösung zum Bilden des Borphosphosilikats und zur Verdampfung der Lösungsmittel.

12. Verfahren zur Herstellung einer Elektrolytmembran, die von einem Verbundmaterial gebildet wird, nach einem der Ansprüche 1 bis 5, das von Borphosphosilikat und einer organischen Matrix aus einem thermisch stabilen Polymer gebildet wird, Verfahren, das **dadurch gekennzeichnet ist, dass** es folgende Schritte umfasst:
- Herstellung einer ersten Lösung, die ein erstes Lösungsmittel und eine Vorstufe des Polymers der Matrix umfasst,
- Herstellung einer zweiten Lösung durch Sol-Gel-Reaktion, die eine Vorstufe des Borphosphosilikats und mindestens ein zweites Lösungsmittel enthält,
- Vermengung der ersten und zweiten Lösung zum Erhalt einer dritten Lösung,
- Aufbringen der dritten Lösung auf einen Träger,
- Wärmebehandlung der dritten Lösung zum Bilden des Borphosphosilikats, zur Verdampfung der Lösungsmittel und Bildung des Polymers.

13. Verfahren zur Herstellung einer Elektrolytmembran, die von einem Verbundmaterial gebildet wird, nach einem der Ansprüche 1 bis 5, das von Borphosphosilikat und einer organischen Matrix aus einem thermisch stabilen Polymer gebildet wird, Verfahren, das **dadurch gekennzeichnet ist, dass** es folgende Schritte umfasst:
- Herstellung einer ersten Lösung, die das erste Lösungsmittel und Polymer der Matrix umfasst,
- Herstellung einer zweiten Lösung durch Sol-Gel-Reaktion, die eine Vorstufe des Borphosphosilikats und mindestens ein zweites Lösungsmittel enthält,
- Vermengung der ersten und zweiten Lösung zum Erhalt einer dritten Lösung,
- Aufbringen der dritten Lösung auf einen Träger,
- Wärmebehandlung der dritten Lösung zum Bilden des Borphosphosilikats und zur Verdampfung der Lösungsmittel.

14. Verfahren zur Herstellung einer Elektrolytmembran, die von einem Verbundmaterial gebildet wird, nach einem der Ansprüche 1 bis 5, das von Borphosphosilikat und einer organischen Matrix aus einem thermisch stabilen Polymer gebildet wird, Verfahren, das **dadurch gekennzeichnet ist, dass** es folgende Schritte umfasst:
- Herstellung einer anorganischen Lösung durch Sol-Gel-Reaktion, die eine Vorstufe des Borphosphosilikats enthält,
- Herstellung einer Membran, die entweder eine Vorstufe des Polymers der organischen Matrix oder das Polymer der organischen Matrix enthält,
- Einwirkung der anorganischen Lösung, die die Vorstufe des Borphosphosilikats in der Membran enthält,
- Wärmebehandlung.

## Claims

1. Composite material **characterized in that** it is composed of borophosphosilicate and an organic matrix constituted by a thermally stable polymer.

2. Composite material according to claim 1, **characterized in that** the polymer is chosen from a polyimide, a polysulfone, a polyetherimide, a polybenzimidazole and a polybenzoxazole.

3. Composite material according to one of claims 1 and 2, **characterized in that** the borophosphosilicate has the following formula: SiO₂-xB₂O₃-yP₂O₅, x and y being positive.

4. Composite material according to any one of claims 1 to 3, **characterized in that** it comprises a coupling agent designed to enhance the chemical interaction between the borophosphosilicate and the organic matrix.

5. Composite material according to any one of claims 1 to 4, **characterized in that** the weight percentage of the borophosphosilicate in the composite material is less than or equal to 50%.

6. Proton-conductive electrochemical device comprising a solid electrolytic membrane **characterized in that** the electrolytic membrane is constituted by a composite material according to any one of claims 1 to 5.

7. Electrochemical device according to claim 6, **characterized in that** the electrolytic membrane has a thickness comprised between 10 micrometres and 100 micrometres.

8. Electrochemical device according to one of claims 6 and 7, **characterized in that** the electrochemical device is a hydrogen sensor.

9. Electrochemical device according to one of claims 6 and 7, **characterized in that** the electrochemical device is a fuel cell.

10. Fabrication method of a composite material according to any one of claims 1 to 5, said composite material being composed of borophosphosilicate and an organic matrix constituted by a thermally stable polymer, method **characterized in that** it comprises at least the following steps:
- preparation of a first solution comprising a first solvent and a precursor of the polymer of the matrix,
- preparation, by sol-gel reaction, of a second solution comprising a precursor of the borophosphosilicate and at least a second solvent,
- mixing of the first and second solutions so as to obtain a third solution,
- depositing the third solution on a support,
- heat treatment of the third solution so as to form the borophosphosilicate, evaporate the solvents and form the polymer.

11. Fabrication method of a composite material according to any one of claims 1 to 5, said composite material being composed of borophosphosilicate and an organic matrix constituted by a thermally stable polymer, method **characterized in that** it comprises at least the following steps:
- preparation of a first solution comprising a first solvent and the polymer of the matrix,
- preparation, by sol-gel reaction, of a second solution comprising a precursor of the borophosphosilicate and at least a second solvent,
- mixing of the first and second solutions so as to obtain a third solution,
- depositing the third solution on a support,
- heat treatment of the third solution so as to form the borophosphosilicate and evaporate the solvents.

12. Fabrication method of an electrolytic membrane constituted by a composite material according to any one of claims 1 to 5, composed of borophosphosilicate and an organic matrix constituted by a thermally stable polymer, method **characterized in that** it comprises at least the following steps:
- preparation of a first solution comprising a first solvent and a precursor of the polymer of the matrix,
- preparation, by sol-gel reaction, of a second solution comprising a precursor of the borophosphosilicate and at least a second solvent,
- mixing of the first and second solutions so as to obtain a third solution,
- depositing the third solution on a support,
- heat treatment of the third solution so as to form the borophosphosilicate, evaporate the solvents and form the polymer.

13. Fabrication method of an electrolytic membrane constituted by a composite material according to any one of claims 1 to 5, composed of borophosphosilicate and an organic matrix constituted by a thermally stable polymer, method **characterized in that** it comprises at least the following steps:
- preparation of a first solution comprising a first solvent and the polymer of the matrix,
- preparation, by sol-gel reaction, of a second solution comprising a precursor of the borophosphosilicate and at least a second solvent,
- mixing of the first and second solutions so as to obtain a third solution,
- depositing the third solution on a support,
- heat treatment of the third solution so as to form the borophosphosilicate and evaporate the solvents.

14. Fabrication method of an electrolytic membrane constituted by a composite material according to any one of claims 1 to 5, composed of borophosphosilicate and an organic matrix constituted by a thermally stable polymer, method **characterized in that** it comprises at least the following steps:
- preparation, by sol-gel reaction, of an inorganic solution comprising a precursor of the borophosphosilicate,
- fabrication of a membrane comprising either a precursor of the polymer of the organic matrix or the polymer of the organic matrix,
- impregnation of the inorganic solution comprising the precursor of the borophosphosilicate in the membrane,
- heat treatment.
